# FASCICULE DE BREVET EUROPEEN

(11) **EP 1 224 718 B1**
(45) Date de publication et mention de la délivrance du brevet: **17.12.2003**
(21) Numéro de dépôt: 00974588.6
(22) Date de dépôt: 27.10.2000
(51) Int. Cl.: H01S 3/06, G01J 3/26

(54) **MICROCAVITE ACTIVE ACCORDABLE ET PROCEDE DE FABRICATION ASSOCIE**
ABSTIMMBARER AKTIVER MIKRORESONATOR UND VERFAHREN ZU SEINER HERSTELLUNG
TUNEABLE ACTIVE MICROCAVITY AND RELATED METHOD FOR MAKING SAME

(30) Priorité: 29.10.1999 FR 9913590
(43) Date de publication de la demande: 24.07.2002
(73) Titulaire: COMMISSARIAT A L'ENERGIE ATOMIQUE, 75752 Paris Cédex 15 (FR)
(72) Inventeur: PICARD, Emmanuel, F-38410 Saint Martin d'Uriage (FR); HADJI, Emmanuel, F-38100 Grenoble (FR)
(74) Mandataire: Brykman, Georges
(86) Numéro de dépôt international: FR0003006
(87) Numéro de publication internationale: WO01031755

(56) Documents cités:
- FR-A- 2 757 319
- US-A- 4 547 801
- US-A- 5 933 444

## Description

### Domaine technique et art antérieur

L'invention concerne une microcavité active accordable ainsi qu'un procédé de fabrication de microcavité active accordable.

L'invention s'applique, entre autres, à la détection et à l'émission infrarouge.

De façon générale, quelles que soient ses dimensions, une cavité est constituée de deux miroirs séparés par une épaisseur e. L'épaisseur d'une cavité résonnant vérifie la relation e=kλ/2n où λ est la longueur d'onde de résonance, n l'indice de réfraction du milieu entre les miroirs et k un nombre entier. La fréquence de résonance de la cavité est rendue accordable en déplaçant les miroirs l'un par rapport à l'autre.

Dans le cas où la cavité est active, un matériau actif tel que, par exemple, du CdHgTe est placé entre les miroirs.

Selon l'art connu, un mode de déplacement des miroirs d'une cavité est effectué à l'aide d'éléments piézo-électriques.

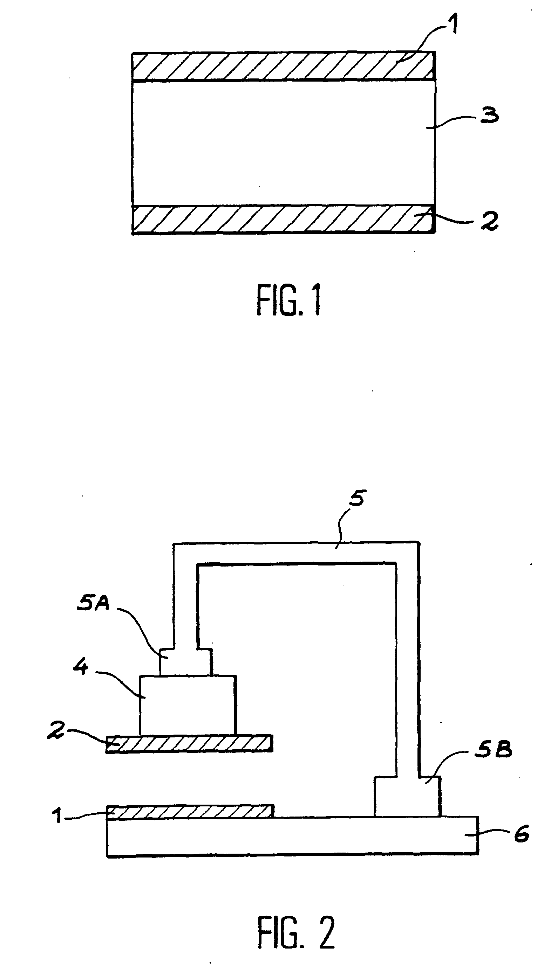

Une cavité accordable selon un premier mode de réalisation de l'art antérieur est décrite en figure 1.

La cavité comprend deux miroirs 1 et 2 et un élément piézo-électrique 3 compris entre les deux miroirs. Par application d'une tension à l'élément piézo-électrique 3, la distance entre les deux miroirs est modifiée.

Les matériaux piézo-électriques ne peuvent pas être usinés de façon à atteindre de très faibles épaisseurs. Il s'ensuit que les cavités obtenues selon le mode de réalisation de l'art antérieur décrit en figure 1 ont des épaisseurs minimales de l'ordre du millimètre. Il n'est alors pas possible de réaliser des microcavités, c'est-à-dire des cavités dont l'épaisseur est de l'ordre du micromètre.

Une cavité accordable selon un deuxième mode de réalisation de l'art antérieur est décrite en figure 2.

Selon ce deuxième mode de réalisation, un actionneur piézo-électrique extérieur à la cavité est utilisé pour faire varier l'épaisseur de la cavité.

La cavité accordable comprend deux miroirs 1 et 2, un actionneur piézo-électrique 4, un bras de support 5 et un support fixe 6. L'actionneur piézo-électrique 4 est situé à l'extérieur de la cavité définie par les miroirs 1 et 2.

Un premier miroir (le miroir 1 sur la figure 2) est fixé sur le support 6. Le deuxième miroir (miroir 2) est fixé sur l'actionneur piézo-électrique 4, lequel est fixé à une première extrémité 5A du bras de support 5 dont la deuxième extrémité 5B est fixée au support 6. Les miroirs 1 et 2 sont placés en regard l'un de l'autre pour former la cavité.

Sous l'action d'une tension appliquée à l'actionneur piézo-électrique, le miroir 2 peut être déplacé par rapport au miroir 1, induisant ainsi une modification de fréquence de la cavité. Un tel dispositif présente des problèmes de référence. Il n'est en effet pas facile d'ajuster avec précision la position du miroir 2 par rapport à la position du miroir 1 situé sur le support fixe 6. La précision avec laquelle le miroir 2 peut être positionné par rapport au miroir 1 est au mieux de l'ordre du millimètre. Il n'est alors possible de réaliser que des cavités dont l'épaisseur minimale est de l'ordre du millimètre.

Selon ce deuxième mode de réalisation, il n'est donc également pas possible de réaliser des microcavités accordables.

Il est connu, par ailleurs, des microcavités accordables. L'un des deux miroirs de la microcavité est alors placé sur une membrane déformable. Cependant, les membranes utilisées sont peu déformables. La bande d'accord en fréquence est alors peu importante. A titre d'exemple, la bande d'accord est typiquement de 5% pour une longueur d'onde centrale de 1µm.

L'invention ne présente pas les inconvénients ci-dessus.

En effet, l'invention concerne une microcavité active accordable comprenant un premier miroir, un deuxième miroir et une couche de matériau actif comprise entre les deux miroirs, caractérisée en ce que la microcavité accordable comprend :
- un actionneur piézo-électrique ayant une première face fixée au premier miroir,
- une structure mécanique fixée au deuxième miroir,
- des moyens mécaniques de liaison fixés, d'une part, à une deuxième face de l'actionneur piézo-électrique de façon que l'actionneur piézo-électrique soit à l'extérieur de l'espace situé entre les premier et deuxième miroirs et, d'autre part, à la structure mécanique de façon à placer les premier et deuxième miroirs de façon sensiblement parallèle l'un à l'autre et à une distance prédéterminée l'un de l'autre,
chacun des deux miroirs étant libre de se déplacer sous l'action d'un signal de commande appliqué à l'actionneur piézo-électrique.

L'invention concerne également un procédé de fabrication de microcavité active accordable comprenant un premier miroir, un deuxième miroir et une couche de matériau actif comprise entre les deux miroirs, caractérisé en ce qu'il comprend les étapes suivantes :
- fixer le premier miroir sur une première face d'un actionneur piézo-électrique de façon à constituer un premier ensemble,
- assembler, de façon rigide, un ensemble constitué du second miroir et de la couche de matériau actif avec une structure mécanique de façon à constituer un deuxième ensemble,
- déplacer le premier ensemble et le deuxième ensemble l'un par rapport à l'autre de façon que l'actionneur piézo-électrique soit à l'extérieur de l'espace situé entre les miroirs et que les deux miroirs soient sensiblement parallèles l'un à l'autre et situés de part et d'autre de la couche de matériau actif,
- fixer la structure mécanique à une deuxième face de l'actionneur piézo-électrique à l'aide de moyens mécaniques de liaison (14, 15), lorsque les deux miroirs sont situés à une distance prédéterminée l'un de l'autre.

Un avantage de l'invention est de permettre un réglage très précis de la position relative des miroirs qui constituent la microcavité.

Il est alors possible de réaliser une microcavité accordable dont l'épaisseur est de l'ordre de quelques microns, par exemple de l'ordre de 2 à 5 µm. Un tel dispositif permet avantageusement de détecter les gaz qui présentent des bandes d'absorption dans l'infrarouge moyen (2-5 µm). Un accord de la longueur d'onde sur plusieurs centaines de nanomètres peut être obtenu.

L'invention est définie dans la revendication 1. Des modes particuliers de réalisation de l'invention sont définies dans les revendications dépendantes.

### Brève description des figures

D'autres caractéristiques et avantages de l'invention apparaîtront à la lecture d'un mode de réalisation préférentiel de l'invention fait en référence aux figures ci-annexées parmi lesquelles :
- la figure 1 représente une cavité accordable selon un premier mode de réalisation de l'art antérieur,
- la figure 2 représente une cavité accordable selon un deuxième mode de réalisation de l'art antérieur,
- la figure 3 représente une microcavité accordable selon l'invention,
- la figure 4 représente un exemple de système de fixation de la microcavité accordable selon l'invention.

### Description détaillée de modes de mise en oeuvre de l'invention

Sur toutes les figures, les mêmes repères désignent les mêmes éléments.

Les figures 1 et 2 ont été décrites précédemment, il est donc inutile d'y revenir.

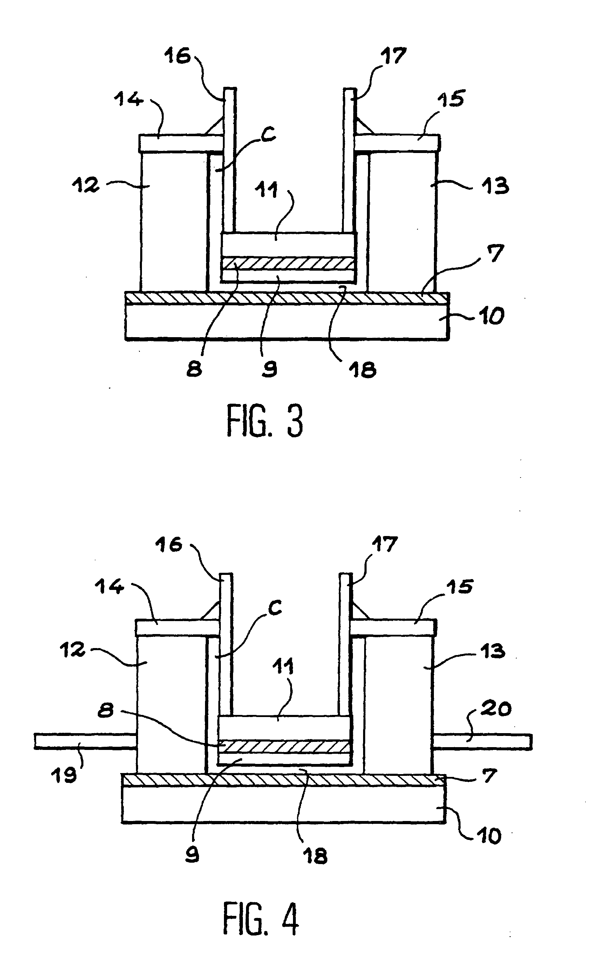

La figure 3 représente une vue en coupe d'une microcavité accordable selon le mode de réalisation préférentiel de l'invention.

La microcavité accordable selon le mode de réalisation préférentiel de l'invention comprend deux miroirs 7 et 8, deux supports de silice 10 et 11, une couche de matériau actif 9, un actionneur piézo-électrique 12, 13, une structure de maintien 16, 17 et des moyens mécaniques de liaison 14, 15.

Selon le mode de réalisation préférentiel de l'invention, l'actionneur piézo-électrique 12, 13 est une pièce de forme cylindrique, par exemple un cylindre de révolution, présentant un trou central la traversant de part en part, d'une première face à une deuxième face.

Le procédé de réalisation de la microcavité accordable selon le mode de réalisation préférentiel de l'invention va maintenant être décrit.

Dans un premier temps, le premier miroir 7 est fixé sur une première face du support de silice 10 et le deuxième miroir 8 est fixé sur une couche de matériau actif 9, par exemple du cdHgTe. La couche de matériau actif 9 est alors amincie jusqu'à obtenir l'épaisseur désirée.

L'ensemble constitué par le matériau actif 9 et le second miroir 8 est alors fixé, par exemple par collage, sur le second support de silice 11 de façon que le miroir 8 soit situé entre le matériau actif 9 et le support de silice 11.

Le support 11, le miroir 8 et la couche de matériau actif 9 sont alors fixés à l'extrémité de la structure de maintien 16, 17.

Le procédé comprend alors deux étapes principales. Une première étape consiste à relier de façon rigide une première face de l'actionneur piézo-électrique 12, 13 à l'ensemble constitué par le miroir 7 et le support de silice 10. L'ensemble ainsi constitué présente alors une cavité C dont le fond est constitué par le miroir 7. La deuxième étape consiste à introduire la structure de maintien 16, 17 dans la cavité C de façon à rapprocher le premier et le deuxième miroir à une distance prédéterminée et à rendre solidaires, de façon rigide, la structure de maintien 16, 17 et la deuxième face de l'actionneur piézo-électrique à l'aide des moyens mécaniques de liaison 14, 15.

Le rapprochement du premier et du deuxième miroirs est effectué, par exemple, à l'aide d'un système à vis micrométrique, d'un système à pression mécanique ou d'un système de type piézo-électrique avec, si nécessaire, un contrôle, par exemple optique, de l'épaisseur d'air 18 entre les miroirs.

La structure de maintien 16, 17 et la deuxième face de l'actionneur piézo-électrique sont fixées l'une à l'autre, par exemple, par collage, sertissage ou blocage mécanique des moyens mécaniques de liaison 14, 15.

L'introduction dans la cavité C de l'ensemble constitué par le tube de maintien 16, 17, le support de silice 11, le miroir 8 et le matériau actif 9 est effectué de façon à ce que le matériau actif 9 se trouve sensiblement au contact du miroir 7. L'épaisseur d'air 18 entre les deux miroirs 7 et 8 est alors minimale. L'épaisseur d'air 18 peut être, par exemple, de l'ordre de quelques µm.

La structure de maintien est préférentiellement de forme tubulaire 16, 17.

Les moyens mécaniques de liaison 14, 15 sont préférentiellement constitués d'une plaque percée d'un orifice dont le diamètre est sensiblement celui de la structure de maintien de forme tubulaire 16, 17.

Selon l'invention, l'actionneur piézo-électrique a une première de ses faces reliée de façon rigide au premier miroir 7 de la cavité et une deuxième de ses faces reliée de façon rigide au deuxième miroir 8 de la cavité. Lorsqu'une tension est appliquée à l'actionneur piézo-électrique 12, 13, chacun des deux miroirs 7 et 8 subit une force qui l'éloigne de l'autre miroir. L'épaisseur d'air 18 s'accroît. La longueur d'onde de résonance dans la microcavité s'accroît alors en conséquence.

Avantageusement, selon l'invention, aucun des deux miroirs ne joue le rôle de référence mécanique pour la microcavité.

Le procédé selon l'invention permet d'obtenir une épaisseur d'air 18 minimale de l'ordre du micromètre avec une précision du même ordre de grandeur. Il est alors possible d'ajuster la position relative des miroirs en contrôlant directement la longueur d'onde de résonance de la microcavité.

Une microcavité dont l'actionneur fonctionne sous une tension variant de 0 à 1 kv et qui est constitué d'une pièce tubulaire de 8 mm de haut, 16 mm de diamètre et présentant un trou central de 8 mm a été réalisé. Une variation de 4 µm de la longueur de la microcavité a été observée correspondant à une variation de 350 nm de la longueur d'onde.

La figure 4 représente un exemple de système de fixation de la microcavité accordable selon l'invention.

La microcavité est alors fixée à la structure qui l'entoure (non représentée sur la figure) par une pièce 19, 20 fixée sur l'actionneur piézo-électrique 12, 13. La pièce 19, 20 est préférentiellement une plaque qui enserre l'actionneur piézo-électrique.

## Revendications

1. Micro-cavité optique accordable comprenant :
- un premier miroir (7),
- un deuxième miroir (8) positionné à une extrémité d'une structure mécanique (11, 16, 17),
- un actionneur piézo-électrique (12, 13) ayant une première face reliée de façon rigide au premier miroir et présentant une zone évidée (C) dans laquelle la structure mécanique (11, 16, 17) est introduite de sorte que les premier et deuxième miroirs soient placés de façon sensiblement parallèle l'un à l'autre,
**caractérisée en ce que** la première face de l'actionneur piézo-électrique est directement fixée sur une première face du premier miroir (7) de façon à constituer une cavité dont le fond est constitué par le premier miroir (7) et **en ce que** la micro-cavité comprend des moyens mécaniques de liaison (14, 15) fixés, d'une part, à une deuxième face de l'actionneur piézo-électrique (12, 13) et, d'autre part, à la structure mécanique (11, 16, 17), la position relative de la structure mécanique (11, 16, 17) par rapport aux moyens mécaniques de liaison (14, 15) étant choisie pour placer les premier et deuxième miroirs à une distance prédéterminée l'un de l'autre.

2. Micro-cavité accordable selon la revendication 1, **caractérisée en ce que** la zone évidée (C) est de section circulaire.

3. Micro-cavité accordable selon la revendication 1 ou 2, **caractérisée en ce que** la structure mécanique (11, 16 ; 17) comprend un support (11) sur lequel est fixé le deuxième miroir (8) et une structure de maintien (16, 17) de forme tubulaire ayant une extrémité fixée au support (11) et **en ce que** les moyens mécaniques de liaison (14, 15) sont constitués d'une plaque percée par un orifice dont le diamètre est sensiblement égal au diamètre de la structure de maintien.

4. Micro-cavité accordable selon l'une quelconque des revendications précédentes, **caractérisée en ce qu'**un support (10) est fixé sur une deuxième face du premier miroir (7).

5. Micro-cavité accordable selon l'une quelconque des revendications précédentes, **caractérisée en ce qu'**une couche de matériau actif (9) est placée entre le premier (7) et le deuxième miroir (8).

6. Micro-cavité accordable selon la revendication 5, **caractérisée en ce que** le matériau actif (9) est du CdHgTe.

7. Procédé de fabrication de micro-cavité accordable comprenant :
- un premier miroir (7),
- un deuxième miroir (8) ayant une première face fixée à une extrémité d'une structure mécanique (11, 16, 17) ,
- un actionneur piézo-électrique (12, 13) ayant une première face reliée de façon rigide au premier miroir (7) et présentant une zone évidée (C) dans laquelle la structure mécanique (11, 16, 17) est introduite de sorte que les premier et deuxième miroirs soient placés de façon sensiblement parallèle l'un à l'autre,
**caractérisé en ce qu'**il comprend les étapes suivantes :
- fixation d'une première face du premier miroir (7) directement sur la première face de l'actionneur piézo-électrique de façon à constituer une cavité dont le fond est constitué par le premier miroir (7),
- introduction de la structure mécanique (11, 16, 17) dans la cavité de façon à rapprocher le premier (7) et le deuxième (8) miroir à une distance prédéterminée, et
- fixation de la structure mécanique (11, 16, 17) à une deuxième face de l'actionneur piézo-électrique à l'aide de moyens mécaniques de liaison (14, 15) lorsque les premier (7) et deuxième (8) miroirs sont distants de la distance prédéterminée.

8. Procédé de fabrication de micro-cavité accordable selon la revendication 7, **caractérisé en ce que** le rapprochement du premier (7) et du deuxième (8) miroir est effectué à l'aide d'un système à vis micrométrique, ou d'un système à pression mécanique, ou d'un système piézo-électrique.

9. Procédé de fabrication de micro-cavité accordable selon la revendication 8, **caractérisé en ce que** le rapprochement du premier (7) et du deuxième (8) miroir s'accompagne d'un contrôle optique d'épaisseur d'air (18) entre les miroirs (7, 8).

10. Procédé de fabrication de micro-cavité accordable selon l'une quelconque des revendications 7 à 9, **caractérisé en ce qu'**il comprend la fixation d'un support (10) sur une deuxième face du premier miroir (7).

11. Procédé de fabrication de micro-cavité accordable selon l'une quelconque des revendications 7 à 10, **caractérisé en ce qu'**il comprend une étape de fixation d'une couche de matériau actif (9) sur une deuxième face du deuxième miroir (8).

12. Procédé de fabrication de micro-cavité accordable selon la revendication 11, **caractérisé en ce que** l'introduction de la structure mécanique (11, 16, 17) dans la cavité est effectuée de façon que le matériau actif se trouve sensiblement au contact du premier miroir (7).

## Claims

1. Tuneable optical microcavity comprising:
- a first mirror (7),
- a second mirror (8) positioned at one end of a mechanical structure (11, 16, 17),
- a piezoelectric actuator (12, 13) having a first face rigidly connected to the first mirror and having a hollowed out zone (C) into which the mechanical structure (11, 16, 17) is introduced in such a way that the first and second mirrors are placed substantially parallel to one another,
**characterized in that** the first face of the piezoelectric actuator is directly fixed to a first face of the first mirror (7) so as to form a cavity, whose bottom is constituted by the first mirror (7) and **in that** the microcavity comprises mechanical connecting means (14, 15) fixed on the one hand to a second face of the piezoelectric actuator (12, 13) and on the other to the mechanical structure (11, 16, 17), the relative position of the mechanical structure (11, 16, 17) with respect to the mechanical connecting means (14, 15) being chosen so as to place the first and second mirrors at a predetermined distance from one another.

2. Tuneable microcavity according to claim 1, **characterized in that** the hollowed out zone (C) has a circular cross-section.

3. Tuneable microcavity according to claim 1 or 2, **characterized in that** the mechanical structure (11, 16, 17) comprises a support (11) to which is fixed the second mirror (8) and a holding structure (16, 17) with a tubular shape having an end fixed to the support (11) and **in that** the mechanical connecting means (14, 15) are constituted by a plate perforated by an orifice, whose diameter is substantially equal to the diameter of the holding structure.

4. Tuneable microcavity according to any one of the preceding claims,
**characterized in that** a support (10) is fixed to a second face of the first mirror (7).

5. Tuneable microcavity according to one of the preceding claims,
**characterized in that** an active material layer (9) is placed between the first mirror (7) and the second mirror (8).

6. Tuneable microcavity according to claim 5, **characterized in that** the active material (9) is of CdHgTe.

7. Process for the production of a tuneable microcavity comprising:
- a first mirror (7),
- a second mirror (8) having a first face fixed to one end of a mechanical structure (11, 16, 17),
- a piezoelectric actuator (12, 13) having a first face rigidly connected to the first mirror (7) and having a hollowed out zone (C) into which the mechanical structure (11, 16, 17) is introduced in such a way that the first and second mirrors are placed substantially parallel to one another,
**characterized in that** it comprises the following steps:
- fixing a first face of the first mirror (7) directly to the first face of the piezoelectric actuator so as to form a cavity, whose bottom is constituted by the first mirror (7),
- introduction of the mechanical structure (11, 16, 17) into the cavity in order to move the first mirror (7) and second mirror (8) together by a predetermined distance and
- fixing the mechanical structure (11, 16, 17) to a second face of the piezoelectric actuator with the aid of mechanical connecting means (14, 15) when the first mirror (7) and second mirror (8) are spaced by a predetermined distance.

8. Process for producing a tuneable microcavity according to claim 7,
**characterized in that** the moving together of the first mirror (7) and second mirror (8) takes place with the aid of a micrometre screw system or a mechanical pressure system or a piezoelectric system.

9. Process for producing a tuneable microcavity according to claim 8,
**characterized in that** the moving together of the first mirror (7) and second mirror (8) is accompanied by an optical air thickness control (18) between the mirrors (7, 8).

10. Process for producing a tuneable microcavity according to any one of the claims 7 to 9, **characterized in that** it comprises the fixing of a support (10) to a second face of the first mirror (7).

11. Process for producing a tuneable microcavity according to any one of the claims 7 to 10, **characterized in that** it comprises a step of fixing an active material layer (9) to a second face of the second mirror (8).

12. Process for producing a tuneable microcavity according to claim 11,
**characterized in that** the introduction of the mechanical structure (11, 16, 17) into the cavity takes place in such a way that the active material is substantially in contact with the first mirror (7).

## Patentansprüche

1. Abstimmbarer optischer Mikroresonator, umfassend:
- einen ersten Spiegel (7),
- einen zweiten Spiegel (8), angeordnet an einem Ende einer mechanischen Struktur (11, 16, 17),
- einen piezo-elektrischen Aktor (12, 13) mit einer ersten Fläche, die starr mit dem ersten Spiegel verbunden ist, und einer ausgesparten Zone (C), in die die mechanische Struktur (11, 16, 17) so eingesetzt wird, dass der erste und der zweite Spiegel im Wesentlichen parallel zueinander sind,
**dadurch gekennzeichnet,**
**dass** die erste Fläche des piezo-elektrischen Aktors direkt auf einer ersten Fläche des ersten Spiegels (7) befestigt ist, auf diese Weise einen Resonator bildend, dessen tiefster Teil der erste Spiegel (7) ist, und dadurch, dass der Mikroresonator mechanische Verbindungseinrichtungen (14, 15) umfasst, die einerseits auf einer zweiten Fläche des piezoelektrischen Aktors (12, 13) und andererseits an der mechanischen Struktur (11, 16, 17) befestigt sind, wobei die relative Position der mechanischen Struktur (11, 16, 17) in Bezug auf die mechanischen Verbindungseinrichtungen (14, 15) so gewählt ist, dass der erste und der zweite Spiegel einen vorher festgelegten Abstand voneinander haben.

2. Abstimmbarer Mikroresonator nach Anspruch 1, **dadurch gekennzeichnet, dass** die ausgesparte Zone (C) einen kreisrunden Querschnitt hat.

3. Abstimmbarer Mikroresonator nach Anspruch 1 oder 2, **dadurch gekennzeichnet, dass** die mechanische Struktur (11, 16, 17) einen Träger (11), an dem der zweite Spiegel (8) befestigt ist, und eine röhrenförmige Haltestruktur (16, 17) umfasst, die mit einem Ende an dem Träger (11) befestigt ist, und dadurch, dass die mechanischen Verbindungseinrichtungen (14, 15) durch eine Platte mit einem Loch gebildet werden, dessen Durchmesser im Wesentlichen gleich dem Durchmesser der Haltestruktur ist.

4. Abstimmbarer Mikroresonator nach einem der vorangehenden Ansprüche, **dadurch gekennzeichnet, dass** ein Träger (10) auf einer zweiten Fläche des ersten Spiegels (7) befestigt ist.

5. Abstimmbarer Mikroresonator nach einem der vorangehenden Ansprüche, **dadurch gekennzeichnet, dass** sich zwischen dem ersten (7) und dem zweiten (8) Spiegel eine Schicht aus aktivem Material (9) befindet.

6. Abstimmbarer Mikroresonator nach Anspruch 5, **dadurch gekennzeichnet, dass** das aktive Material (9) CdHgTe ist.

7. Verfahren zur Herstellung eines abstimmbaren Mikroresonators, umfassend:
- einen ersten Spiegel (7),
- einen zweiten Spiegel (8), mit einer ersten Seite an einem Ende einer mechanischen Struktur (11, 16, 17) befestigt,
- einen piezo-elektrischen Aktor (12, 13) mit einer ersten Fläche, die starr mit dem ersten Spiegel (7) verbunden ist und eine ausgesparte Zone (C) aufweist, in die die mechanische Struktur (11, 16, 17) so eingesetzt wird, dass der erste und der zweite Spiegel im Wesentlichen parallel zueinander sind,
**dadurch gekennzeichnet, dass** es die folgenden Schritte umfasst:
- Befestigen einer ersten Fläche des ersten Spiegels (7) direkt auf der ersten Fläche des piezoelektrischen Aktors, so dass sich ein Resonator bildet, dessen tiefster Teil der erste Spiegel (7) ist,
- Einsetzen der mechanischen Struktur (11, 16, 17) in den Resonator, so dass der erste (7) und der zweite (8) Spiegel einen vorher festgelegten Abstand voneinander haben,
- Befestigen der mechanischen Struktur (11, 16, 17) an einer zweiten Fläche des piezoelektrischen Aktors mit Hilfe mechanischer Verbindungseinrichtungen (14, 15), wenn der erste (7) und der zweite (8) Spiegel den vorher festgelegten Abstand voneinander haben.

8. Verfahren zur Herstellung eines abstimmbaren Mikroresonators nach Anspruch 7, **dadurch gekennzeichnet, dass** die Annäherung zwischen dem ersten (7) und zweiten (8) Spiegel mit Hilfe eines Mikrometerschraubensystems oder eines mechanischen Drucksystems oder eines piezo-elektrischen Systems erfolgt.

9. Verfahren zur Herstellung eines abstimmbaren Mikroresonators nach Anspruch 8, **dadurch gekennzeichnet, dass** die Annäherung zwischen dem ersten (7) und dem zweiten (8) Spiegel von einer optischen Kontrolle der Luftdicke (18) zwischen den Spiegeln (7, 8) begleitet wird.

10. Verfahren zur Herstellung eines abstimmbaren Mikroresonators nach einem der Ansprüche 7 bis 9, **dadurch gekennzeichnet, dass** es die Befestigung eines Trägers (10) auf einer zweiten Fläche des ersten Spiegels (7) umfasst.

11. Verfahren zur Herstellung eines abstimmbaren Mikroresonators nach einem der Ansprüche 7 bis 10, **dadurch gekennzeichnet, dass** es einen Schritt zur Befestigung einer Schicht aus aktivem Material (9) auf einer zweiten Seite des zweiten Spiegels (8) umfasst.

12. Verfahren zur Herstellung eines abstimmbaren Mikroresonators nach Anspruch 11, **dadurch gekennzeichnet, dass** das Einsetzen der mechanischen Struktur (11, 16, 17) in den Resonator in der Weise erfolgt, dass das aktive Material im Wesentlichen Kontakt hat mit dem ersten Spiegel (7).
